# EUROPÄISCHE PATENTSCHRIFT

(11) **EP 1 249 336 B1**
(45) Veröffentlichungstag und Bekanntmachung des Hinweises auf die Patenterteilung: **14.07.2004**
(21) Anmeldenummer: 02001637.4
(22) Anmeldetag: 24.01.2002
(51) Int. Cl.: B32B 1/08, B32B 27/32, B32B 27/08, B32B 27/36, B32B 27/34, B32B 27/28, F16L 11/04

(54) **Mehrschichtrohr für kohlenwasserstoffhaltige Fluide**
Multilayered pipe for hydrocarbon-containing fluids
Tube multicouche pour fluides contenant des hydrocarbones

(30) Priorität: 10.04.2001 DE 10117915; 21.04.2001 DE 10119584
(43) Veröffentlichungstag der Anmeldung: 16.10.2002
(73) Patentinhaber: Rasmussen GmbH, 63477 Maintal (DE)
(72) Erfinder: Kertesz, Janos, 65719 Hofheim (DE)
(74) Vertreter: Knoblauch, Andreas, Dr.-Ing.

(56) Entgegenhaltungen:
- EP-A- 0 637 509
- EP-A- 0 730 115
- US-A- 5 390 705

## Beschreibung

Die Erfindung bezieht sich auf ein Mehrschichtrohr für kohlenwasserstoffhaltige Fluide, insbesondere Kraftstoffe für Verbrennungsmotoren, mit wenigstens vier koextrudierten Schichten.

Ein bekanntes Mehrschichtrohr dieser Art (EP 0 428 833 B1) hat fünf Schichten, von denen die innerste aus PA6, die äußerste aus PA11 oder PA12 und eine mittlere Schicht ebenfalls aus PA6 besteht. Zwischen der innersten und der mittleren Schicht ist eine Lösungsinhibitorschicht aus einem Copolymer und Vinylalkohol und zwischen der mittleren und der äußersten Schicht ein Haftvermittler aus Polyethylen oder Polypropylen ausgebildet. Dieses Rohr hat zwar eine hohe Diffusionssperrfähigkeit gegen kohlenwasserstoffhaltige Kraftstoffe, aber keine ausreichende Formstabilität bei höheren Temperaturen. Auch die Diffusionssperrfähigkeit gegen alkoholhaltige Kraftstoffe ist nicht ausreichend

Aus der EP-A-637 509 ist ein Mehrschichtrohr für Kraftstoffe aus vier oder fünf Schichten bekannt, dessen innerste, erste Schicht ein Polyamid aufweist. Eine dritte Schicht enthält ein thermoplastisches Polyester, wie PBN oder PBT.

Aus der EP-A-730 115 ist ein Mehrschichtrohr bekannt, bei dem eine Sperrschicht für Kraftstoffkomponenten aus einer Formmasse auf der Basis von thermoplastischem Polyester, Polyolefinen oder EVOH besteht. Der Erfindung liegt die Aufgabe zugrunde, ein Mehrschichtrohr der gattungsgemäßen Art anzugeben, das eine bessere Diffusionssperrfähigkeit gegen Kraftstoffe, insbesondere Ottokraftstoffe (Benzin) und eine höhere thermische Formstabilität hat.

Erfindungsgemäß besteht die Lösung dieser Aufgabe in einem Mehrschichtrohr für kohlenwasserstoffhaltige Fluide, insbesondere Kraftstoffe für Verbrennungsmotoren, mit wenigstens vier koextrudierten Schichten, von denen eine erste Schicht im wesentlichen wenigstens eines der Materialien Polyamid, Polyethylen, Polypropylen und Polybutylen, eine zweite Schicht im wesentlichen ein Polyolefincopolymer, eine dritte Schicht im wesentlichen ein thermoplastisches Polyester und eine vierte Schicht im wesentlichen ein thermoplastisches Etheresterelastomer (TEEE) aufweist.

Bei dieser Lösung bildet nicht nur die zweite Schicht, sondern auch die dritte und vierte Schicht jeweils eine Diffusionssperrschicht. Die das thermoplastische Polyester aufweisende dritte Schicht sorgt darüber hinaus für eine hohe Formstabilität auch bei Temperaturen von über 100°C. Das thermoplastische Etheresterelastomer (TEEE) der vierten Schicht hat eine hohe Schlagzähigkeit und aufgrund seiner hohen Dichte von ca. 1,28 g/cm³ auch eine sehr hohe Diffusionssperrfähigkeit. Da insgesamt drei Diffusionssperrschichten vorhanden sind, ergibt sich eine insgesamt sehr geringe Kraftstoffdurchlässigkeit, selbst bei geringer Wandstärke des Mehrschichtrohres. Dennoch lassen sich diese Sperrschichten fest im geschmolzenem Zustand während der Koextrusion stoffschlüssig verbinden, sei es mit oder ohne Haftvermittler.

Vorzugsweise ist das Polyolefincopolymer ein Ethylenvinylalkohol. Dieses Material hat eine sehr hohe Sperrfähigkeit gegenüber alkoholfreien Kraftfahrzeug-Kraftstoffen.

Bei dem Polyamid der ersten Schicht kann es sich um ein PA6 handeln. Dieser Kunststoff hat eine sehr hohe Chemikalienbeständigkeit.

Bei dem Polyester der dritten Schicht kann es sich um ein Polybutylenterephthalat (PBT) oder ein Polybutylennaphthalat (PBN) handeln. Diese Materialien ergeben eine besonders hohe thermische Formstabilität und Diffusionssperrfähigkeit gegenüber alkoholhaltigen Kraftstoffen.

Vorzugsweise ist die Anordnung der einzelnen Schichten so gewählt, daß die erste Schicht die innerste Schicht ist, daß die zweite Schicht die erste Schicht umgibt und die dritte Schicht zwischen der zweiten Schicht und der vierten Schicht liegt. Diese Reihenfolge der Schichten ist vorteilhaft, weil Ethylenvinylalkohol nicht unmittelbar mit Kraftstoff in Berührung kommen sollte. Andernfalls verringert sich die Diffusionssperrfähigkeit, wenn der Kraftstoff, wie im Normalfall, etwas Wasser enthält. TEEE sollte ganz außen liegen, weil es eine hohe Kälteschlagzähigkeit besitzt. PA6 sollte ganz innen liegen, weil es wegen seiner mangelhaften Zinkchloridbeständigkeit nicht außen liegen sollte. PBT sollte an der zweiten Stelle von außen liegen, weil es sich ohne Haftvermittler mit TEEE verschweißen oder verschmelzen läßt.

Vorzugsweise liegt eine fünfte Schicht, die im wesentlichen ein funktionalisiertes Polyolefin aufweist, zwischen der zweiten Schicht und der dritten Schicht. Sie ist vorteilhaft, um die zweite und dritte Schicht miteinander zu verbinden, wenn diese nicht so modifiziert sind, daß sie sich ohne Haftvermittler verschmelzen lassen. Das funktionalisierte Polyolefin hat durch seine hohe Polarität die Fähigkeit, sich einerseits mit der zweiten Schicht und andererseits mit der dritten Schicht thermisch stoffschlüssig zu verbinden.

Vorzugsweise handelt es sich bei dem funktionalisierten Polyolefin der fünften Schicht um ein Glycidilmethacrylatcopolymer oder ein maleinsäureanhydridgepfropftes Polyolefin. Diese Materialien haben eine besonders hohe Polarität und lassen sich daher sehr sicher einerseits mit der zweiten und andererseits mit der dritten Schicht thermisch stoffschlüssig verbinden.

Um zu erreichen, daß die erste Schicht eine festere Verbindung mit der angrenzenden Schicht eingeht, sollte das Polyethylen, Polypropylen und Polybutylen der ersten Schicht funktionalisiert sein.

Eine besonders feste Verbindung läßt sich erreichen, wenn das Polyethylen, Polypropylen und Polybutylen der ersten Schicht Copolymere sind.

Vorzugsweise ist wenigstens eine der Schichten vernetzt. Dadurch wird die thermische Stabilität und die Sperrfähigkeit gegen kohlenwasserstoffhaltige Fluide weiter verbessert.

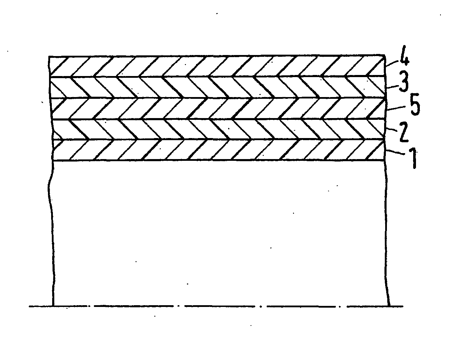

Die beiliegende Zeichnung stellt ein erfindungsgemäßes Ausführungsbeispiel eines Mehrschichtrohrs im Axialschnitt ausschnittsweise dar.

Das als Beispiel dargestellte Mehrschichtrohr besteht aus einer ersten Schicht 1, die im wesentlichen Polyamid, vorzugsweise PA6, aufweist, einer zweiten Schicht 2, die im wesentlichen ein Polyolefincopolymer, vorzugsweise ein Ethylenvinylalkohol (EVOH), aufweist, einer dritten Schicht 3, die im wesentlichen ein thermoplastisches Polyester, vorzugsweise ein PBT oder PBN aufweist, einer vierten Schicht 4, die im wesentlichen ein TEEE aufweist, und einer fünften Schicht 5, die zwischen der zweiten Schicht 2 und der dritten Schicht 3 liegt und im wesentlichen ein funktionalisiertes Polyolefin, vorzugsweise ein Glycidilmethacrylatcopolymer oder ein maleinsäureanhydridgepfropftes Polyolefin, aufweist.

Die erste Schicht 1 bildet die innerste Schicht, die zweite Schicht 2 umgibt die erste Schicht, und die dritte Schicht 3 liegt zwischen der zweiten Schicht 2 und der vierten Schicht 4, wobei die vierte Schicht 4 die äußerste Schicht ist.

Dieses Mehrschichtrohr ist besonders für Kraftstoffe von Kraftfahrzeugen, wie Benzin (Otto-Kraftstoff), geeignet und hat eine sehr hohe Diffusionssperrfähigkeit gegenüber solchen Kraftstoffen, aber auch anderen kohlenwasserstoffhaltigen Fluiden. Darüber hinaus hat es eine sehr hohe Formstabilität auch bei höheren Temperaturen, die über 100°C hinausgehen. Die Verwendung von TEEE ergibt nicht nur eine hohe Diffusionssperrfähigkeit, sondern auch eine hohe Schlagzähigkeit. PBT und PBN erhöhen die thermische Formstabilität und Diffusionssperrfähigkeit insbesondere gegenüber alkoholhaltigen Kraftstoffen.

Um zu verhindern, daß EVOH unmittelbar mit Kraftstoffen in Berührung kommt, liegt es zwischen der ersten und dritten Schicht. Andernfalls würde sich die Diffusionssperrfähigkeit verringern, wenn der Kraftstoff, wie im Normalfall, etwas Wasser enthält. Bei Verwendung von TEEE sollte es wegen seiner hohen Kälteschlagzähigkeit ganz außen liegen. PA6 sollte ganz innen liegen, um zu verhindern, daß es gegebenenfalls mit Zinkchlorid in Berührung kommt.

Um zu erreichen, daß die erste Schicht 1 eine festere Verbindung mit der angrenzenden Schicht 2 eingeht, sollte das Polyethylen, Polypropylen und Polybutylen der ersten Schicht 1 funktionalisiert sein.

Eine besonders feste Verbindung läßt sich erreichen, wenn das Polyethylen, Polypropylen und Polybutylen der ersten Schicht 1 Copolymere sind.

Vorzugsweise ist wenigstens eine der Schichten 1 bis 5 vernetzt. Dadurch wird die thermische Stabilität und die Sperrfähigkeit gegen kohlenwasserstoffhaltige Fluide weiter verbessert.

Die fünfte Schicht 5 kann entfallen, wenn die zweite Schicht 2 und die dritte Schicht 3 so modifiziert sind, daß sie sich ohne Haftvermittler verschmelzen lassen. Die Verwendung von funktionalisiertem Polyolefin für die fünfte Schicht 5 hat den Vorteil, daß es sich wegen seiner hohen Polarität einerseits mit der zweiten Schicht 2 und andererseits mit der dritten Schicht 3 thermisch stoffschlüssig verbinden läßt.

Eine Abwandlung des beschriebenen Ausführungsbeispiels kann darin bestehen, daß die erste Schicht 1 als wesentlichen Bestandteil nicht nur Polyamid, sondern alternativ oder zusätzlich zu Polyamid wenigstens eines der Materialien Polyethylen, Polypropylen und Polybutylen aufweist.

## Patentansprüche

1. Mehrschichtrohr für kohlenwasserstoffhaltige Fluide, insbesondere Kraftstoffe für Verbrennungsmotoren, mit wenigstens vier koextrudierten Schichten (1-4), von denen eine erste Schicht (1) im wesentlichen wenigstens eines der Materialien Polyamid, Polyethylen, Polypropylen und Polybutylen, eine zweite Schicht (2) im wesentlichen ein Polyolefincopolymer, eine dritte Schicht (3) im wesentlichen ein thermoplastisches Polyester und eine vierte Schicht (4) im wesentlichen ein thermoplastisches Etheresterelastomer (TEEE) aufweist.

2. Mehrschichtrohr nach Anspruch 1, **dadurch gekennzeichnet, daß** das Polyolefincopolymer ein Ethylenvinylalkohol (EVOH) ist.

3. Mehrschichtrohr nach Anspruch 1 oder 2, **dadurch gekennzeichnet, daß** das Polyamid der ersten Schicht (1) ein PA6 ist.

4. Mehrschichtrohr nach einem der Ansprüche 1 bis 3, **dadurch gekennzeichnet, daß** das Polyester der dritten Schicht (3) ein Polybutylenterephthalat (PBT) oder ein Polybutylennaphthalat (PBN) ist.

5. Mehrschichtrohr nach einem der Ansprüche 1 bis 4, **dadurch gekennzeichnet, daß** die erste Schicht (1) die innerste Schicht ist, daß die zweite Schicht (2) die erste Schicht (1) umgibt und die dritte Schicht (3) zwischen der zweiten Schicht (2) und der vierten Schicht (4) liegt.

6. Mehrschichtrohr nach Anspruch 5, **dadurch gekennzeichnet, daß** eine fünfte Schicht (5) zwischen der zweiten Schicht (2) und der dritten Schicht (3) liegt und im wesentlichen ein funktionalisiertes Polyolefin aufweist.

7. Mehrschichtrohr nach Anspruch 6, **dadurch gekennzeichnet, daß** das funktionalisierte Polyolefin der fünften Schicht (5) ein Glycidilmethacrylatcopolymer oder ein maleinsäureanhydridgepfropftes Polyolefin ist.

8. Mehrschichtrohr nach einem der Ansprüche 1 bis 7, **dadurch gekennzeichnet, daß** das Polyethylen, Polypropylen und Polybutylen der ersten Schicht (1) funktionalisiert sind.

9. Mehrschichtrohr nach einem der Ansprüche 1 bis 8, **dadurch gekennzeichnet, daß** das Polyethylen, Polypropylen und Polybutylen der ersten Schicht (1) Copolymere sind.

10. Mehrschichtrohr nach einem der Ansprüche 1 bis 9, **dadurch gekennzeichnet, daß** wenigstens eine der Schichten (1 bis 5) vernetzt ist.

## Claims

1. A multilayer pipe for hydrocarbon-containing fluids, in particular fuels for internal combustion engines, comprising at least four co-extruded layers (1-4) of which a first layer (1) substantially contains at least one of the materials polyamide, polyethylene, polypropylene and polybutylene, a second layer (2) substantially contains a polyolefin copolymer, a third layer (3) substantially contains a thermoplastic polyester and a fourth layer (4) substantially contains a thermoplastic ether ester elastomer (TEEE).

2. A multilayer pipe according to claim 1 **characterised in that** the polyolefin copolymer is an ethylene vinyl alcohol (EVOH).

3. A multilayer pipe according to claim 1 or claim 2 **characterised in that** the polyamide of the first layer (1) is a PA6.

4. A multilayer pipe according to one of claims 1 to 3 **characterised in that** the polyester of the third layer (3) is a polybutylene terephthalate (PBT) or a polybutylene naphthalate (PBN).

5. A multilayer pipe according to one of claims 1 to 4 **characterised in that** the first layer (1) is the innermost layer, the second layer (2) surrounds the first layer (1) and the third layer is between the second layer (2) and the fourth layer (4).

6. A multilayer pipe according to claim 5 **characterised in that** a fifth layer (5) is disposed between the second layer (2) and the third layer (3) and substantially contains a functionalised polyolefin.

7. A multilayer pipe according to claim 6 **characterised in that** the functionalised polyolefin of the fifth layer (5) is a glycidil methacrylate copolymer or a maleic acid anhydride-grafted polyolefin.

8. A multilayer pipe according to one of claims 1 to 7 **characterised in that** the polyethylene, polypropylene and polybutylene of the first layer (1) are functionalised.

9. A multilayer pipe according to one of claims 1 to 8 **characterised in that** the polyethylene, polypropylene and polybutylene of the first layer (1) are copolymers.

10. A multilayer pipe according to one of claims 1 to 9 **characterised in that** at least one of the layers (1 to 5) is cross-linked.

## Revendications

1. Tube multicouche pour fluides contenant des hydrocarbures, en particulier pour carburants pour moteurs à combustion, ayant au moins quatre couches co-extrudées (1-4) dont une première couche (1) comprend essentiellement au moins l'une des matières polyamide, polyéthylène, polypropylène et polybutylène, une deuxième couche (2) essentiellement un copolymère de polyoléfine, une troisième couche (3) essentiellement un polyester thermoplastique et une quatrième couche (4) essentiellement un élastomère thermoplastique éther-ester (TEEE).

2. Tube multicouche selon la revendication 1, **caractérisé en ce que** le copolymère de polyoléfine est un éthylène-alcool vinylique (EVOH).

3. Tube multicouche selon la revendication 1 ou 2, **caractérisé en ce que** le polyamide de la première couche (1) est un PA6.

4. Tube multicouche selon l'une quelconque des revendications 1 à 3, **caractérisé en ce que** le polyester de la troisième couche (3) est un térephtalate de polybutylène (PBT) ou un naphtalate de polybutylène (PBN).

5. Tube multicouche selon l'une quelconque des revendications 1 à 4, **caractérisé en ce que** la première couche (1) est la couche la plus à l'intérieur, **en ce que** la deuxième couche (2) entoure la première couche (1) et la troisième couche (3) est située entre la deuxième couche (2) et la quatrième couche (4).

6. Tube multicouche selon la revendication 5, **caractérisé en ce qu'**une cinquième couche (5) se trouve entre la deuxième couche (2) et la troisième couche (3) et comprend essentiellement une polyoléfine fonctionnalisée.

7. Tube multicouche selon la revendication 6, **caractérisé en ce que** la polyoléfine fonctionnalisée de la cinquième couche (5) est un copolymère de méthacrylate de glycidile ou une polyoléfine tamponnée avec de l'anhydride de l'acide maléique.

8. Tube multicouche selon l'une quelconque des revendications 1 à 7, **caractérisé en ce que** le polyéthylène, le polypropylène et le polybutylène de la première couche (1) sont fonctionnalisés.

9. Tube multicouche selon l'une quelconque des revendications 1 à 8, **caractérisé en ce que** le polyéthylène, le polypropylène et le polybutylène de la première couche (1) sont des copolymères.

10. Tube multicouche selon l'une quelconque des revendications 1 à 9, **caractérisé en ce qu'**au moins l'une des couches (1 à 5) est réticulée.
